# EUROPÄISCHE PATENTSCHRIFT

(11) **EP 2 737 143 B1**
(45) Veröffentlichungstag und Bekanntmachung des Hinweises auf die Patenterteilung: **23.05.2018**
(21) Anmeldenummer: 13729010.2
(22) Anmeldetag: 07.06.2013
(51) Int. Cl.: E04H 12/22, E02D 27/42, E01F 9/60, F03D 13/20

(54) **VORRICHTUNG ZUR VERANKERUNG VON AUFBAUTEN IM ERDBODEN**
DEVICE FOR ANCHORING CONSTRUCTIONS IN THE GROUND
DISPOSITIF D'ANCRAGE DE SUPERSTRUCTURES DANS LE SOL

(30) Priorität: 19.07.2012 DE 102012212700
(43) Veröffentlichungstag der Anmeldung: 04.06.2014
(73) Patentinhaber: Kellner, Peter, 36269 Phillippsthal (DE)
(72) Erfinder: Kellner, Peter, 36269 Phillippsthal (DE)
(74) Vertreter: Liedtke, Klaus
(86) Internationale Anmeldenummer: PCT/EP2013/061846
(87) Internationale Veröffentlichungsnummer: WO 2014/012708

(56) Entgegenhaltungen:
- WO-A1-2010/059489
- DE-A1-102010 009 140
- DE-U1-202005 003 425
- US-A- 4 799 642
- US-A- 5 363 116

## Beschreibung

Die Erfindung betrifft eine Vorrichtung zur Verankerung von Aufbauten im Erdboden.

Die Erfindung ist für die Bodenverankerung unterschiedlicher Aufbauten einsetzbar. Dies können beispielsweise Verkehrszeichen, Werbeflächen, Solaranlagen, Windräder, Schallschutzwände, Sendemaste sowie eine Vielzahl weiterer Bauteile sein.

Derartige Bauteile werden bisher im Allgemeinen in einem Betonfundament verankert, das an Ort und Stelle in ein hierzu ausgehobenes Erdloch eingebracht wird. Die hiermit verbundenen Arbeiten sind aufwändig und kostenintensiv.

In DE 197 01 299 A1 wird vorgeschlagen, einen Betonschacht, der aus vorgefertigten, an der Einbaustelle zusammenzusetzenden Teilen besteht, als Fundament für den Träger zu verwenden, in dem der Träger an dem Schacht unbeweglich befestigt wird, bevor der Schacht mit dem unteren Teil des Trägers in den Boden eingesetzt wird.

Hierzu muss zunächst ein Loch im Erdboden ausgehoben werden, der Träger an dem Schacht befestigt werden, der Schacht in das Erdloch eingesetzt und so ausgerichtet werden, dass der Träger die gewünschte Lage einnimmt. Anschließend wird das verbleibende Erdloch zugeschüttet und das Bodenmaterial so verdichtet, dass der Schacht und damit der Träger fest im Erdboden verankert sind.

Üblicherweise wird das verbleibende Erdloch um den Schacht herum mit Beton aufgefüllt, um den Schacht noch fester im Erdboden zu verankern, was im Falle der Befestigung besonders hoher Träger oder Masten oder besonders stark belasteter Träger erforderlich ist.

Aus DE 10 2010 009 140 A1 ist eine Verankerungsvorrichtung bekannt, die einen Grundkörper zur Befestigung von Aufbauten enthält, wobei der untere Bereich des Erdkörpers erdseitig mit einer Grundplatte verbunden ist, in deren Ebene ein ebenes Flächengebilde konzentrisch zum Grundköper angeordnet ist, welches fest mit diesem verbunden ist und der obere Bereich mit einem Aufbauteil verbindbar ist.

In der US 4,799,642 A wird ein Antennenträger zum Halten einer Antenne auf einer Oberfläche, beispielsweise einem Dach, beschrieben. Der Antennenträger weist einen länglichen Mast, eine Basisstruktur und Verstrebungen zwischen dem Mast und der Basisstruktur auf, welche den Mast in einer vertikalen Position halten. Die Verstrebungen sind am Mast von dessen Mittelachse beabstandet befestigt, so dass sie den Mast gegen ein Verdrehen um seine Mittelachse sichern.

Aus der US 5,363,116 A ist eine portable faltbare Trägerstruktur für eine Mikrowellen-Schüsselantenne bekannt. Drei oder mehr Beine sind an einer Mittelsäule nahe ihrem oberen Endes angelenkt, welche schräg zu einer Grundebene verlaufen und in dieser Grundebene mittels Streben mit der Mittelsäule verbunden sind.

In der DE 20 2005 003 425 U1 wird eine Gründung für eine Offshore-Windenergieanlage beschrieben. Die Gründung umfasst wenigstens drei Fundamente mit jeweils wenigstens einem Fundamentknotenelement. Die Fundamente sind auf eine Aufstandsebene aufzusetzen, paarweise durch Felgenrohre miteinander verbunden und jeweils über ein Sternverbindungselement mit einem Schaft-Fußknotenelement verbunden, das im Zentrum des durch die Fundamente aufgespannten Polygons und unterhalb eines Kopfknotenelements angeordnet ist. Die Gründung umfasst des Weiteren Kopfstreben, die sich jeweils von einem Fundamentknotenelement bis zu einem oberhalb der Aufstandsebene angeordneten Kopfknotenelement erstrecken. Die Knotenelemente sind aus Beton gebildet. Die Speichenrohre, die Felgenrohre und die Kopfstreben sind als Schleuderbetonrohre ausgebildet, die jeweils zwischen Anschlagflächen an den Fundamentknotenelementen, an dem Kopfknotenelement und/oder an dem Schaft-Fußknotenelement eingespannt sind. Wenigstens die Kopfstreben sind jeweils über wenigstens ein Spannglied zwischen den Fundamentknotenelementen und dem Kopfknotenelement eingespannt.

Ferner ist aus WO 2010/059489 A1 eine stationäre Offshore-Windkraftanlage bekannt, welche ein festes Fundament auf dem Meeresboden aufweist, das für eine große Höhe der Aufbauten ausgelegt ist. Das Fundament besitzt im Meeresboden eingebrachte Bauteile, an denen Verbindungselemente befestigt sind, welche ein in Höhe der Wasseroberfläche angebrachtes Oberteil stützen, welches zur Aufnahme eines oberhalb der Wasseroberfläche angebrachten Mastes dient.

Der Erfindung liegt die Aufgabe zugrunde, die bekannten Verankerungsvorrichtungen so zu verbessern, dass sie eine hohe Beanspruchung ermöglichen und gleichzeitig mit geringem Aufwand transportiert und montiert werden können.

Die Aufgabe wird erfindungsgemäß mit einer Anordnung gelöst, welche die in Anspruch 1 angegebenen Merkmale aufweist.

Vorteilhafte Ausgestaltungen der Erfindung sind Gegenstand der Unteransprüche.

Die Vorrichtung enthält in einer ersten Ausführungsform eine Trägersäule und Stützplatten. Die Trägersäule besteht vorzugsweise aus einem Rohr, kann aber auch aus anderen Profilen, beispielsweise einem U-Profil, bestehen. Die Stützplatten bilden an der Unterseite der Vorrichtung eine Stützebene. Diese Stützebene wird zumindest von äußeren Stützplatten gebildet und ist auf dem Grund einer Bodenaushebung aufsetzbar. Die Trägersäule ist vorzugsweise ein durchgängiges Rohr, welches an ihrer Oberseite aus der Bodenebene heraus ragt. Die äußeren Stützplatten sind mit einem räumlichen Stabtragwerk mit der Trägersäule verbunden. Das Stabtragwerk wird von Verbindungsstegen gebildet. Dabei sind die äußeren Stützplatten untereinander und mit der Trägersäule mit horizontal angeordneten Stegen verbunden. Mit weiteren schräg angeordneten Verbindungsstegen sind die äußeren Stützplatten mit einem Bereich der Trägersäule verbunden, der sich in der Ebene des Bodens oder kurz unterhalb dieser Ebene befindet. Zur Befestigung der schräg angeordneten Verbindungsstege befindet sich an der Trägersäule ein Befestigungselement, an dem die schräg angeordneten Verbindungsstege befestigt sind. Es ist auch möglich, dass jeder schräg angeordnete Verbindungsstab mit einem gesonderten Befestigungselement an der Trägersäule befestigt ist.
Die Trägersäule, die Stützplatten und die Verbindungsstege bestehen aus Stahl, wobei alle diese Bauteile durch Schraubverbindungen miteinander verbunden sind.
Am oberen Ende der Trägersäule können verschiedene Aufbauten angebracht werden. Die Vorrichtung kann in Einzelteilen an den Aufstellungsort transportiert und dort zusammengeschraubt werden. Zur Aufstellung ist es lediglich erforderlich eine Grube auszuheben, in die die montierte Vorrichtung gesetzt wird. Danach wird die Grube mit dem Bodenaushub wieder verfüllt und verdichtet.
In einer erfindungsgemäßen Ausführungsform umfasst die Vorrichtung zur Verankerung von Aufbauten im Erdboden ein Trägerelement und in einer Stützebene angeordnete Stützplatten. Das Trägerelement, die Stützplatten und die Verbindungsstege bestehen aus Stahl und sind durch Schraubverbindungen miteinander verbunden. Die Stützplatten sind durch Verbindungsstege mit dem Trägerelement verbunden, indem horizontale Stege in der Stützebene äußere Stützplatten untereinander verbinden und Schrägstege das Trägerelement mittels eines am Trägerelement angeordneten Befestigungselementes mit den in der Stützebene liegenden Stützplatten verbinden.
Diese Ausführungsform der Vorrichtung ist beispielsweise als Fundament für ein Bauwerk verwendbar. Beispielsweise sind eine Mehrzahl derartiger Vorrichtungen auf dem Grund einer Bodenaushebung aufsetzbar, welche anschließend mit Füllmaterial zu verfüllen ist. Die Trägerelemente der Vorrichtungen befinden sich nach dem Verfüllen der Bodenaushebung auf Höhe einer Geländeoberkante, d. h. auf Höhe der Bodenebene. Auf diese Trägerelemente ist dann das im Erdboden zu verankernde Bauwerk, beispielsweise eine Bodenplatte eines Gebäudes, aufzusetzen. Dies ermöglicht ein sehr schnelles, einfaches und kostengünstiges Ausbilden des Fundamentes im Vergleich zu herkömmlichen Fundamenten, welche sehr aufwändig zu gießen sind und danach eine vorgegebene Zeit, beispielsweise mehrere Tage, aushärten müssen, bevor die Bauarbeiten fortgesetzt werden können. In dieser Ausführungsform müssen die Vorrichtungen insbesondere vertikale Kräfte, welche durch das auf den Vorrichtungen liegende Bauwerk auf die Vorrichtungen einwirken, über die Trägerelemente aufnehmen und über die Verbindungsstege und die Stützplatten an den Untergrund ableiten. Horizontale Kräfte treten hierbei nicht oder nur gering auf. Die Vorrichtungen, insbesondere deren Trägerelemente, werden über das von ihnen gestützte Bauwerk, beispielsweise die Bodenplatte, in horizontaler Richtung stabilisiert. Das Bauwerk, zum Beispiel die Bodenplatte, liegt auf den Trägerelementen auf, so dass kein seitliches Kipp- oder Drehmoment auf die Trägerelemente einwirkt und die Trägerelemente sowie die Vorrichtungen daher keine Tendenz zum seitlichen Kippen aufweisen.

Auch diese Ausführungsform der Vorrichtung kann in Einzelteilen an den Aufstellungsort transportiert und dort zusammengeschraubt werden. Zur Aufstellung ist es auch hier lediglich erforderlich, eine Grube auszuheben, in die die montierte Vorrichtung gesetzt wird bzw. bei dieser Ausführungsform eine Mehrzahl von Vorrichtungen gesetzt werden. Danach wird die Grube mit dem Bodenaushub wieder verfüllt und verdichtet.

Besonders vorteilhaft ist bei beiden Ausführungsformen, dass der ausgehobene Boden wieder verwendet wird, ohne dass Rückstände verbleiben und ohne dass im Boden Betonteile eingebracht werden müssen. Damit werden eine Bodenversiegelung und die damit erbundenen Umweltbelastungen vermieden.

Zweckmäßigerweise ist bei der Ausführungsform mit Trägersäule am bodenseitigen Ende der rohrförmigen Trägersäule eine zentrale Stützplatte angeschweißt. Durch diese zentrale Stützplatte ist die Lagestabilisierung der Vorrichtung weiter verbessert und die Vorrichtung noch stärker belastbar, ohne in den Boden einzusinken.

Eine vorteilhafte Ausführung sieht vor, dass die Stützplatten rechteckförmig ausgebildet sind. Damit wird sowohl eine kostengünstige Herstellung als auch eine gute Stabilität erreicht. Außerdem ist diese Gestaltung für den Transport der Vorrichtung gut geeignet. Alternativ sind auch andere Formen möglich, beispielsweise rund, oval oder vieleckförmig, zum Beispiel drei-, fünf-, sechs-, sieben-, acht- oder neuneckförmig oder auch mit mehr Ecken. Dabei ist es auch möglich, an der Vorrichtung verschieden ausgeformte Stützplatten zu verwenden. Auf diese Weise können beispielsweise an jeweilige Erfordernisse angepasste Stützplatten verwendet werden.

Zur Erhöhung der Festigkeit sind an den Stützplatten Versteifungsbleche angeschweißt. Die Versteifungsbleche werden zur Befestigung der Verbindungsstege mittels Schraubverbindung genutzt.

Eine weitere vorteilhafte Ausführung sieht vor, dass die Vorrichtung vier äußere Stützplatten enthält, die jeweils mit Verbindungsstegen mit der Trägersäule verbunden sind, beispielsweise mit der an der Trägersäule angeordneten zentralen Stützplatte, wenn diese vorhanden ist. Damit kann mit geringem Aufwand eine hohe Standsicherheit erreicht werden, so dass vertikale und horizontale Belastungskräfte optimal aufgenommen werden können. In anderen Ausführungsformen kann die Vorrichtung auch eine andere Anzahl äußerer Stützplatten aufweisen, beispielsweise lediglich zwei oder drei äußere Stützplatten oder auch fünf oder mehr äußere Stützplatten.

Die erfindungsgemäße Ausführungsform der Vorrichtung, welche das Trägerelement aufweist, kann ebenfalls zwei, drei, vier, fünf oder mehr äußere Stützplatten aufweisen, welche dann in der Stützebene miteinander verbunden sind und durch Schrägstege mit dem Trägerelement verbunden sind.

Eine vorteilhafte Ausführung sieht vor, dass die Verbindungsstege Stahlstege mit einem U-Profil sind. Diese Ausführung ergibt sowohl eine hohe Festigkeit und gestattet ein einfaches Verschrauben. Durch die Verwendung besonders breiter, nach oben offener U-Profile, in welcher das Erdreich eingebracht wird, ergibt sich eine hohe Belastungsmöglichkeit.

Ferner ist es möglich, dass die Verbindungsstege mit der Trägersäule bzw. mit dem Trägerelement über Drehgelenke verbunden sind. Damit kann die Vorrichtung zusammengeklappt transportiert werden und am Aufstellungsort einfach und schnell in den Endzustand gebracht werden. Umfangreiche Montagearbeiten an der Vorrichtung sind auf diese Weise am Aufstellungsort nicht mehr erforderlich. Das Zusammenklappen und Aufklappen erfolgt beispielsweise analog einem Regenschirm.

Eine weitere Ausführung sieht vor, dass an der Trägersäule bzw. am Trägerelement Kopplungselemente zur lösbaren Verbindung mit Transporthilfsbauteilen angeordnet sind. Vorteilhafterweise sind als Transporthilfsbauteile die Stützplatten zu verwenden. Dadurch sind die Vorrichtungsteile für einen Transport platzsparend anzuordnen und zudem aneinander zu befestigen, so dass ein Verlust von Einzelteilen während des Transports verhindert ist. Des Weiteren sind auf diese Weise die Vorrichtungsteile derart anzuordnen, dass die Vorrichtung eine für den Transport und für eine eventuell eingesetzte Transportverpackung günstige Ausformung aufweist, beispielsweise eine kompakte Quaderform.

In einer vorteilhaften Ausführungsform sind an den äußeren Stützplatten Ansatzteile zur oberirdischen Befestigung angeordnet. Diese Ausführungsform der Vorrichtung ist nicht in eine Erdgrube einzusetzen, sondern oberirdisch mittels der Ansatzteile an Bauteilen zu befestigen, beispielsweise auf einem Gebäudedach oder auf einem Betonfundament. Auf diese Weise sind zusätzliche Verwendungsmöglichkeiten für die Vorrichtung gegeben.

In einer weiteren vorteilhaften Ausführungsform sind die in der Stützebene angeordneten Bauteile mit einer zusätzlichen Abdeckung versehen. Diese Abdeckung kann beispielsweise als ein Blech, zum Beispiel ein profiliertes Blech, oder als ein so genanntes Geotextil ausgebildet sein, beispielsweise als ein so genanntes Geovlies. Alternativ sind auch andere Materialien zur Abdeckung geeignet.

In einer weiteren vorteilhaften Ausführungsform sind an den äußeren Stützplatten zusätzliche Verankerungen angebracht. Diese zusätzlichen Verankerungen können beispielsweise jeweils als Erddübel oder Bohrfundament ausgebildet sein. Die zusätzlichen Verankerungen können sowohl senkrecht als auch waagerecht oder schräg in das Erdreich eingebracht werden.

Eine weitere vorteilhafte Ausführung sieht vor, dass an den Stützplatten einstellbare Stützfüße angeordnet sind. Die Stützfüße sind vorteilhaft so ausgeführt, dass sie von oben betätigt werden können. Damit können Unebenheiten der Bodenfläche ausgeglichen werden, so dass eine senkrechte Ausrichtung der Trägersäule bzw. des Trägerelementes auch dann möglich ist, wenn der Boden, auf den die Vorrichtung aufgesetzt wird, schräg oder uneben ist.

In einer weiteren vorteilhaften Ausführungsform ist zumindest ein Seitenbereich zumindest einer der Stützplatten abgewinkelt. Vorteilhafterweise sind mehrere Seitenbereiche abgewinkelt, beispielsweise beide Längsseitenbereiche und/oder beide Querseitenbereiche. Vorteilhafterweise weisen mehrere oder alle Stützplatten eine oder mehrere derartige Abkantungen auf. Der zumindest eine Seitenbereich oder die mehreren Seitenbereiche kann/können jeweils nach oben oder bevorzugt nach unten abgewinkelt sein, beispielsweise in einem Winkel von ca. 90°. Durch die Abkantung oder bevorzugt die mehreren Abkantungen ist eine horizontale Bewegung der jeweiligen Stützplatte und somit der Vorrichtung verhindert, da die jeweilige Stützplatte und über diese die Vorrichtung mittels der Abkantung oder der Mehrzahl von Abkantungen im Erdreich verankert und somit gegen horizontale Bewegungen gesichert ist.

In einer weiteren vorteilhaften Ausführungsform ist zumindest eine der Stützplatten schwenkbar angeordnet. Vorteilhafterweise sind mehrere oder alle Stützplatten der Vorrichtung schwenkbar angeordnet. Auf diese Weise ist eine Anpassung der Ausrichtung der Stützplatten an einen Grund der Bodenaushebung ermöglicht, so dass ein sicheres Aufstellen der Vorrichtung ermöglicht ist.

Üblicherweise ist die Trägersäule bei der ersten Ausführungsform der Vorrichtung bzw. das Trägerelement bei der zweiten Ausführungsform der Vorrichtung mittig angeordnet, d. h. die äußeren Stützplatten weisen alle die gleiche Entfernung zur Trägersäule bzw. zum Trägerelement auf, um auf diese Weise eine gleichmäßige Stabilisierung in alle Richtungen zu ermöglichen. Es ist jedoch auch eine andere Variante möglich, in welcher die rohrförmige Trägersäule in der ersten Ausführungsform der Vorrichtung bzw. das Trägerelement in der zweiten Ausführungsform der Vorrichtung außermittig angeordnet ist. Bei dieser Variante weisen eine oder mehrere äußere Stützplatten einen geringeren Abstand zur Trägersäule bzw. zum Trägerelement auf als eine oder mehrere weitere äußere Stützplatten. Es können auch drei oder mehr äußere Stützplatten vorgesehen sein, welche jeweils einen unterschiedlichen Abstand zur Trägersäule bzw. zum Trägerelement aufweisen. Dadurch ist eine Anpassung der Vorrichtung an jeweilige Erfordernisse ermöglicht, beispielsweise an unterschiedliche Abstützungserfordernisse in unterschiedliche Richtungen, oder an einen begrenzten Bauraum.

So sind beispielsweise vier solcher Vorrichtungen zur Abstützung eines Hochspannungsmastes einzusetzen, wobei jeweils eine Vorrichtung für jede von vier im Wesentlichen vertikalen Maststreben des Hochspannungsmastes vorgesehen ist. Aufgrund der Ausformung des Hochspannungsmastes steht dabei zwischen den vier auf einer rechteckigen oder quadratischen Grundfläche angeordneten Vorrichtungen nur ein begrenzter Bauraum zur Verfügung, so dass die äußeren Stützplatten einer Vorrichtung, welche in Richtung einer anderen der Vorrichtungen und damit auf einem Randbereich der rechteckförmigen oder quadratischen Grundfläche des Hochspannungsmastes angeordnet sind, einen kleinen Abstand zur Trägersäule aufweisen, an welcher sie befestigt sind, und die anderen äußeren Stützplatten der jeweiligen Vorrichtung, welche von den jeweiligen anderen Vorrichtungen abgewandt sind und außerhalb der rechteckförmigen oder quadratischen Grundfläche des Hochspannungsmastes angeordnet sind, weisen einen größeren Abstand zur jeweiligen Trägersäule und damit auch einen relativ großen Abstand zum Hochspannungsmast auf. Insbesondere durch diese außerhalb der rechteckigen oder quadratischen ursprünglichen Grundfläche des Hochspannungsmastes angeordneten äußeren Stützplatten wird aufgrund ihrer relativ großen Entfernung zur jeweiligen Trägersäule eine sehr große durch die Vorrichtungen aufgespannte Grundfläche und eine große Hebelwirkung der Vorrichtungen gegen horizontale Belastungen des Hochspannungsmastes erreicht, so dass der Hochspannungsmast gegen Kippbewegungen sehr gut gesichert ist und auf diese Weise auch großen horizontalen Belastungen standhält.

Die Vorrichtung ist in der Lage sowohl hohe vertikale als auch hohe horizontale Lasten sicher aufzunehmen.

Die angreifenden vertikalen Lasten werden durch die räumlich angeordneten Schrägstege so auf die Stützplatten verteilt, dass eine größtmögliche Kippstabilität erreicht wird. Die Fixierung der Stützplatten erfolgt zur Trägersäulenachse hin mit radialen Stegen und zusätzlich untereinander mit tangentialen Stegen, wodurch ein räumlich in sich stabiles Gebilde erreicht wird.

Die angreifenden horizontalen Lasten werden durch paarweise gegenüberliegende Schrägstege zu den Auflager-Stahlplatten geleitet, wo sie von den auf die Stützplatten aufgeschweißten Versteifungsblechen, den radialen Stegen und den tangentialen Stegen auf das Erdreich übertragen werden.

Ein besonderer Vorteil der Vorrichtung ist, dass die Schrägstege und die Stützplatten unterirdisch angeordnet sind, um einerseits einen großen Widerstand gegenüber abhebenden Kräften durch Ausnutzung der Erdauflast zu erreichen und um andererseits den Lichtraum um den aus den Erdboden ragenden Masten nicht einzuschränken.

Zusätzlich wird durch die Erdauflast auf den radialen Stegen und den tangentialen Stegen der Widerstand gegenüber abhebenden Kräften nochmals vergrößert.

Gleichzeitig wird die horizontale Verformung (z. B. eines Mastes) unter Belastung gegenüber einem nur entlang des Mastfußes im Erdreich eingebetteten Mastfußes wesentlich verringert.

Gegenüber einer Verankerung aus Beton hat die Vorrichtung den Vorteil, dass sie ein wesentlich geringeres Gewicht aufweist, einen wesentlich geringeren Bauraumbedarf erfordert, schnell zu installieren ist, keine Bodenversiegelung zur Folge hat und die kostengünstigere Lösung ist. Eine Betonverankerung muss im Gegensatz dazu in mehreren Schritten gegossen werden und danach jeweils mehrere Tage aushärten. Durch das wesentlich geringere Gewicht der Vorrichtung im Vergleich zu einer Betonverankerung tritt keine zusätzliche Belastung des Bodens auf.

Zudem ist aufgrund der geringen Masse der Vorrichtung, welche wesentlich geringer ist als herkömmliche Betonverankerungen, Gründungen oder Fundamente, eine verbesserte Erdbebensicherheit erreicht. Unter Berücksichtigung von Erdbebenlasten ist ein geringes Gewicht besonders vorteilhaft, denn je leichter die Vorrichtung ist, desto weniger Kräfte muss sie im Fall eines Erdbebens aufnehmen. Geraten große und träge Massen in Bewegung, beispielsweise ein herkömmliches Betonfundament, verstärken sie die einwirkende Kraft des Bebens. Dies ist bei der beschriebenen Vorrichtung aufgrund ihrer geringen Masse nicht der Fall. Zudem weist die Vorrichtung eine hohe Stabilität auf, auch bei Einwirkungen von Vibrationen beispielsweise eines Erdbebens, so dass auch in einem solchen Fall das Halten des Gleichgewichts der Vorrichtung auch bei starken Vibrationen sichergestellt und die Gefahr des Kippens oder Weggleitens erheblich reduziert ist. Des Weiteren ist die Vorrichtung robust und flexibel und weist bei großen Belastungen, beispielsweise aufgrund starker Erschütterungen oder Vibrationen, insbesondere im Fall eines Erdbebens, ein elastisches Verhalten auf, so dass Deformationen aufgenommen werden, ohne dass Schäden entstehen. Die Vorrichtung weist auf diese Weise die Fähigkeit auf, Energie zu absorbieren und durch Erdbeben hervorgerufene Deformationen in ihren Komponenten aufzunehmen, ohne dass dabei größere Schäden entstehen.

Durch das Anordnen der Vorrichtung in einer Bodengrube, auch als Bodenaushebung bezeichnet, und das nachfolgende Verfüllen der Bodengrube, indem nach dem Einsetzen der Vorrichtung das vorher ausgehobene Erdreich wieder bis zur Erdoberfläche eingefüllt und verdichtet wird, ist die Vorrichtung sowohl gegen auftretende horizontale als auch vertikale Belastungen stabilisiert. Vertikale Belastungen werden von den Stützplatten in den Untergrund unter der Vorrichtung abgeleitet. Bei auftretenden horizontalen Belastungen, welche an der Trägersäule angreifen, tendiert die Vorrichtung dazu, in Kraftwirkungsrichtung der angreifenden horizontalen Belastungskraft zu kippen. Dies wird durch die in Kraftwirkungsrichtung hinter der Trägersäule angeordnete äußere Stützplatte oder die mehreren äußeren Stützplatten verhindert, welche die Vorrichtung gegen den Untergrund abstützen und auftretende Kräfte nach unten in den Untergrund ableiten.

Zudem wird dieses Kippen insbesondere auch durch die in Kraftwirkungsrichtung vor der Trägersäule angeordnete äußere Stützplatte oder die mehreren äußeren Stützplatten verhindert, welche die Vorrichtung gegen das auf diesen äußeren Stützplatten befindliche Erdreich, d. h. gegen die Erdauflast, abstützen und somit auftretende Kräfte nach oben in dieses Erdreich ableiten.

Bei Versuchen mit auf die Vorrichtung einwirkenden horizontalen Belastungen hat sich erwiesen, dass bei einem Kippen der Vorrichtung eine erhebliche Menge Erdreich mobilisiert wird. Es bildet sich dabei ein Ausbruchskegel, welcher sich am Grund der zum Einsetzen der Vorrichtung ausgehobenen und anschließend wieder verfüllten Bodengrube über die gesamte Fläche der Bodengrube erstreckt und sich nach oben zunehmend erweitert. Dabei wird durch die fachwerkartige Ausbildung der Vorrichtung das Erdreich im gesamten Bereich der Vorrichtung und somit im gesamten Bereich der zum Einsetzen der Vorrichtung ausgehobenen und anschließend wieder verfüllten Bodengrube vollständig mobilisiert, d. h. über eine gesamte von der Vorrichtung überdeckte Grundfläche hinweg und nicht nur im Bereich der Stützplatten. Daraus resultiert durch das Bodenmaterial eine sehr große Auflast, welche die Vorrichtung stabilisiert und am Kippen hindert, so dass die Vorrichtung sehr großen Belastungen, insbesondere auch sehr großen horizontalen Belastungen, standhält.

Die Bettung der Vorrichtung in Erdreich und nicht in Beton hat zudem den Vorteil, dass keine Alterungserscheinungen auftreten. Eine Betonverankerung altert und kann aufbrechen. Das Erdreich stabilisiert dagegen die Vorrichtung über sehr lange Zeit. Sollten auch nur kleinste Bewegungen oder Vibrationen der Vorrichtung auftreten, so rutscht das Erdreich dadurch nach und wird verfestigt, so dass sich die Vorrichtung selbst und dauerhaft im Erdreich stabilisiert. Das Erdreich nimmt insbesondere auch zyklische Belastungen und Schwingungen wesentlich besser auf als beispielsweise Beton, bei welchem durch derartige Belastungen eine große Beschädigungsgefahr besteht. So ist die Vorrichtung beispielsweise auch für Windkraftanlagen geeignet, bei welchen es zu solchen Vibrationen kommen kann. Da die Vorrichtung auf die beschriebene Weise mittels der Stützplatten stabil im Erdreich verankert ist, können auch große Belastungen ohne negative Folgen auf die Vorrichtung einwirken.

Diese Stabilisierung der Vorrichtung mittels des Erdreichs kann durch eine Abdeckung der in der Stützebene angeordneten Bauteile weiter verbessert werden, so dass die Vorrichtung noch größeren Belastungen standhalten kann. Die Abdeckung ist beispielsweise als ein profiliertes Blech, ein Geovlies oder ein anderes Material ausgebildet.

Da durch die Vorrichtung keine Bodenversiegelung erfolgt, kann sich oberhalb der Vorrichtung ein Pflanzenbewuchs bilden, dessen Wurzelwerk als zusätzliche Bewehrung fungiert, wodurch die Vorrichtung noch stabiler im Boden verankert ist. Des Weiteren kann die Vorrichtung mittels der Anzahl und Anordnung der äußeren Stützplatten exakt an jeweilige Erfordernisse angepasst werden. Beispielsweise ist die Anzahl und Ausrichtung der äußeren Stützplatten derart ausgelegt, dass die Vorrichtung die erforderliche Standfestigkeit exakt in der erforderlichen Richtung aufweist und nicht, wie bei einer Betonhalterung, in alle Richtungen. D. h. bei der Vorrichtung werden nur die Lasten berücksichtigt, die tatsächlich auftreten. Dadurch ist eine Material-, Gewichts-, und Kostenreduzierung zu erreichen.

Ausführungsbeispiele der Erfindung werden im Folgenden anhand von Zeichnungen näher erläutert.

Darin zeigen:
- Figur 1: eine perspektivische Ansicht der Vorrichtung,
- Figur 2: eine perspektivische Ansicht der Vorrichtung mit geteilter Trägersäule,
- Figur 3: die Anordnung der Vorrichtung in einer Bodengrube,
- Figur 4: die Vorrichtung in Transportstellung,
- Figur 5: eine Ausführung zur oberirdischen Verwendung,
- Figur 6: eine Ausführung mit zusätzlicher Abdeckung der Stützebene,
- Figur 7: eine Ausführungsform einer Stützplatte, und
- Figur 8: eine von einer Mehrzahl der Vorrichtungen gestützte Bodenplatte.

Einander entsprechende Teile sind in allen Figuren mit den gleichen Bezugszeichen versehen.

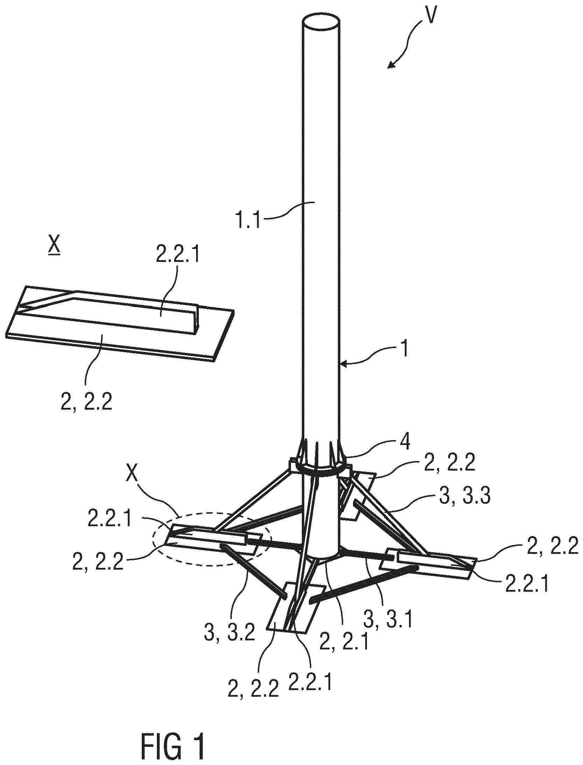

**Figur 1** zeigt in perspektivischer Ansicht eine Ausführungsform einer Vorrichtung V zur Verankerung von Aufbauten im Erdboden im montierten Zustand. Die Vorrichtung V enthält eine rohrförmige Trägersäule 1 und Stützplatten 2, umfassend hier eine zentrale Stützplatte 2.1 und äußere Stützplatten 2.2. Die Trägersäule 1 ragt an ihrer Oberseite aus der Bodenebene heraus und reicht an der Unterseite bis an die zentrale Stützplatte 2.1. In weiteren, hier nicht näher dargestellten Ausführungsformen ist diese zentrale Stützplatte 2.1 nicht unbedingt erforderlich. Die hier dargestellte Vorrichtung V weist eine zentrale Stützplatte 2.1 und in der dargestellten Ausführung vier äußere Stützplatten 2.2 auf. Die Stützplatten 2 sind an Verbindungsstegen 3 befestigt, umfassend radiale Stege 3.1, tangentiale Stege 3.2 und Schrägstege 3.3. Die zentrale Stützplatte 2.1 und die äußeren Stützplatten 2.2 bilden an der Unterseite der Vorrichtung V eine Stützebene, welche auf den Grund einer Bodenaushebung aufgesetzt wird. Die äußeren Stützplatten 2.2 sind untereinander mit tangentialen Stegen 3.2 und mit der zentralen Stützplatte 2.1 durch radiale Stege 3.1 verbunden. Weist die Vorrichtung V keine zentrale Stützplatte 2.1 auf, so sind die äußeren Stützplatten 2.2 durch die radialen Stege 3.1 mit der rohrförmigen Trägersäule 1 verbunden. Mit Schrägstegen 3.3 sind die äußeren Stützplatten 2.2 mit dem Bereich der Trägersäule 1 verbunden, der sich nach dem Einsetzen der Vorrichtung V in dem Boden der Ebene oder kurz unterhalb dieser Ebene befindet. Die Stützplatten 2, d. h. die zentrale Stützplatte 2.1 und/oder die äußeren Stützplatten 2.2, können eine feste Ausrichtung aufweisen oder schwenkbar sein, so dass eine Einstellung der jeweiligen Stützplatte 2 je nach Bedarf in einem vorgegebenen Winkel möglich ist. Zur Befestigung der Schrägstege 3.3 an der Trägersäule 1 ist an dieser ein Befestigungselement 4 angebracht. Das Befestigungselement 4 besteht in der dargestellten Ausführung aus einem Ring, der an der Trägersäule 1 angeschweißt ist und der Bohrungen aufweist, an denen die oberen Enden der Schrägstege 3.3 angeschraubt werden.

In der Einzelheit X ist eine Ausführung gezeigt, bei der auf einer äußeren Stützplatte 2.2 ein Versteifungsblech 2.2.1 angebracht ist. Die Versteifungsbleche 2.2.1 können zur Befestigung der Verbindungsstege 3 genutzt werden. Zudem sind die äußeren Stützplatten 2.2 durch derartige Versteifungsbleche 2.2.1 stabilisiert.

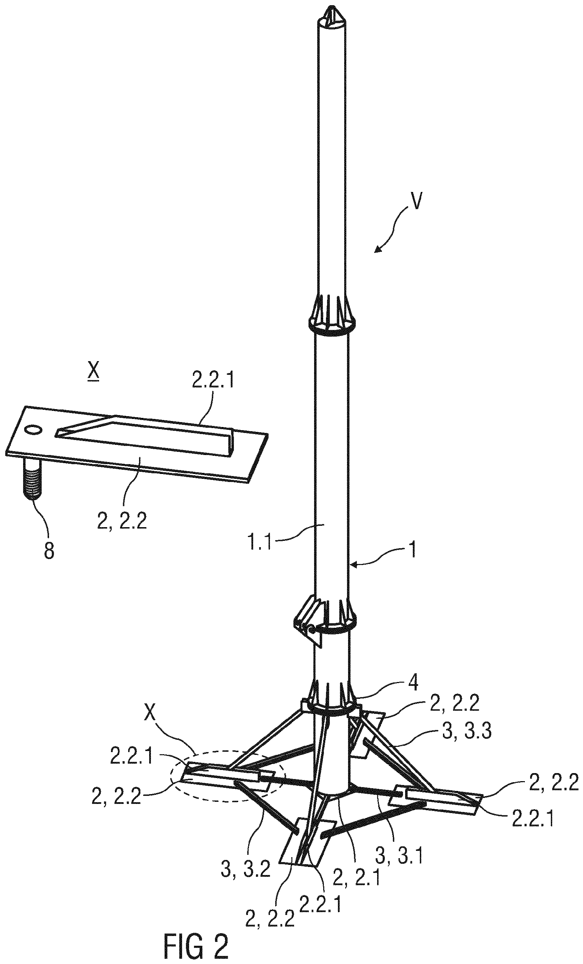

In der in **Figur 2** dargestellten Ausführung ist an der Trägersäule 1 eine Rohrverlängerung 1.1 angebracht, welche mittels einer schwenkbaren Verbindung mit der Trägersäule 1 verbunden ist. Damit können Ausführungen, die für hoch angeordnete Aufbauten vorgesehen sind, leichter aufgestellt werden. In der Einzelheit X dieser Figur 2 ist eine Möglichkeit gezeigt, bei der an den äußeren Stützplatten 2.2 zusätzliche Verankerungen angebracht sind. Verankerungsmittel 8 können beispielsweise Erddübel oder Bohrfundamente sein. Die Verankerungen können sowohl senkrecht als auch waagerecht in das Erdreich eingebracht werden.

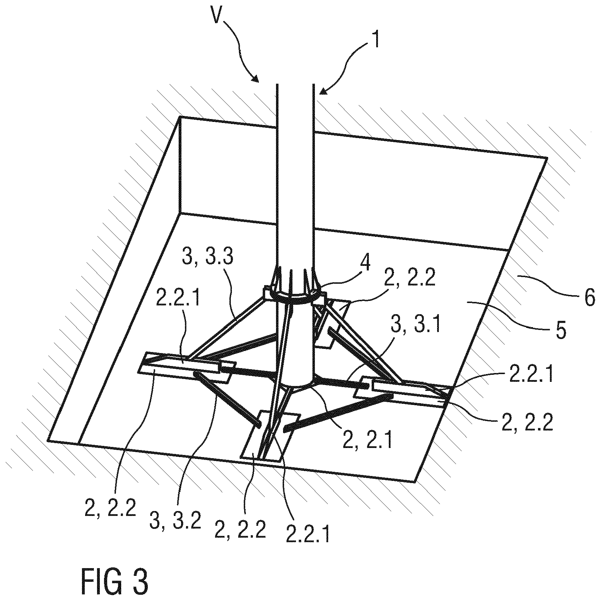

**Figur 3** erläutert die Anordnung der Vorrichtung V in einer Bodengrube 5, auch als Bodenaushebung bezeichnet. In der Zeichnung ist der Zustand vor dem Verfüllen der Bodengrube 5 dargestellt. Nach dem Einsetzen der Vorrichtung V wird das vorher ausgehobene Erdreich wieder bis zur Erdoberfläche 6 eingefüllt und verdichtet. Die Vorrichtung V ist auf diese Weise sowohl gegen auftretende horizontale als auch vertikale Belastungen stabilisiert. Vertikale Belastungen werden von den Stützplatten 2 in den Untergrund unter der Vorrichtung V abgeleitet. Bei auftretenden horizontalen Belastungen, welche an der Trägersäule 1 angreifen, tendiert die Vorrichtung V dazu, in Kraftwirkungsrichtung der angreifenden horizontalen Belastungskraft zu kippen. Dies wird durch die in Kraftwirkungsrichtung hinter der Trägersäule 1 angeordnete äußere Stützplatte 2.2 oder die mehreren äußeren Stützplatten 2.2 verhindert, welche die Vorrichtung V gegen den Untergrund abstützen und auftretende Kräfte nach unten in den Untergrund ableiten. Zudem wird dieses Kippen auch durch die in Kraftwirkungsrichtung vor der Trägersäule 1 angeordnete äußere Stützplatte 2.2 oder die mehreren äußeren Stützplatten 2.2 verhindert, welche die Vorrichtung V gegen das auf diesen äußeren Stützplatten 2.2 befindliche Erdreich, d. h. gegen die Erdauflast, abstützen und somit auftretende Kräfte nach oben in dieses Erdreich ableiten. Da die Vorrichtung V auf die beschriebene Weise mittels der Stützplatten 2 stabil im Erdreich verankert ist, können auch große Belastungen ohne negative Folgen auf die Vorrichtung V einwirken.

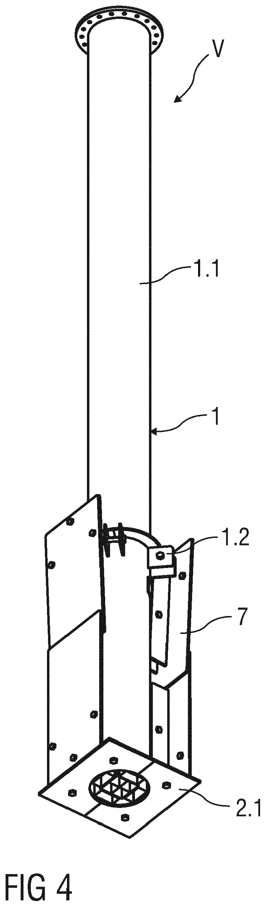

**Figur 4** zeigt die Vorrichtung V in Transportstellung. An der Trägersäule 1 sind Kopplungselemente 1.2 angebracht, die eine lösbare Verbindung von Transporthilfsbauteilen 7 an der Trägersäule 1 ermöglichen. Im dargestellten Beispiel sind an der Trägersäule 1 Laschen angebracht, in die Gewinde von Transporthilfsbauteilen 7 eingreifen können. Als Transporthilfsbauteile 7 werden vorteilhaft die Stützplatten 2 verwendet, zumindest die äußeren Stützplatten 2.2. Damit ergibt sich eine platzsparende Zusammenstellung der Bauteile der Vorrichtung V, bei der außerdem die Vorrichtung V in einer für Transportzwecke besonders geeigneten Quaderform verpackt werden kann.

In einer weiteren, hier nicht dargestellten Ausführungsform kann die Vorrichtung V auch zusammenklappbar ausgebildet sein, beispielsweise analog einem Regenschirm. Hierzu sind die Verbindungsstege 3 mit der rohrförmigen Trägersäule 1 beispielsweise über Drehgelenke verbunden, so dass die Verbindungsstege 3 und die äußeren Stützplatten 2.2 an die Trägersäule 1 angeklappt werden können. Zweckmäßigerweise ist dazu auch die Verbindung der Verbindungsstege 3 mit den Stützplatten 2 mittels solcher Drehgelenke ausgebildet. Auf diese Weise ist die Vorrichtung V für den Transport zusammenzuklappen und dadurch bauraumsparend zu transportieren. Am jeweiligen Aufstellungsort ist die Vorrichtung V dann lediglich aufzuklappen und aufzustellen. Umfangreiche Montagearbeiten an der Vorrichtung V sind auf diese Weise am Aufstellungsort nicht mehr erforderlich.

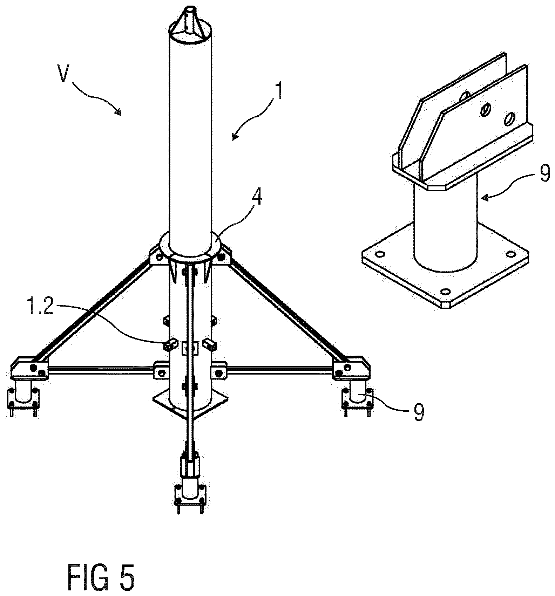

In **Figur** 5 ist eine Ausführung dargestellt, die nicht in einer Erdgrube eingesetzt wird, sondern oberirdisch an Bauteilen, beispielsweise an einem Gebäudedach, angebracht werden kann. Hierzu sind an den äußeren Stützplatten 2.2 Ansatzteile 9 angeordnet, mit denen die Vorrichtung V befestigt werden kann. Diese Ausführungsform der Vorrichtung V kann beispielsweise auch auf einem Betonfundament angeordnet und mittels der Ansatzteile 9 daran befestigt werden kann.

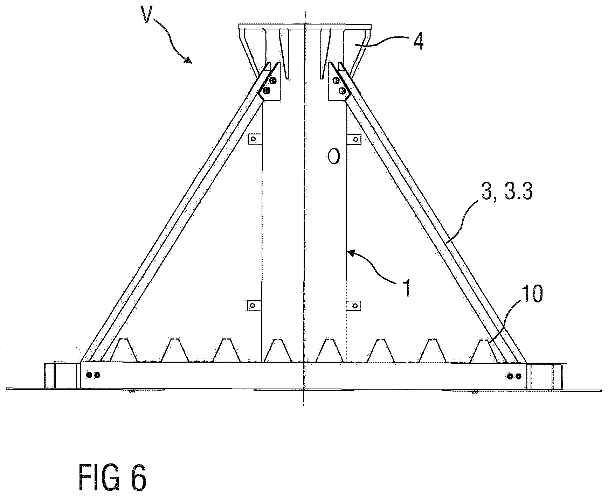

**Figur 6** zeigt eine Ausführungsform, bei der die in der Stützebene angeordneten Bauteile mit einer zusätzlichen Abdeckung 10 versehen sind. Im dargestellten Beispiel wurde eine Abdeckung mit einem profilierten Blech verwendet. Es sind natürlich auch andere Materialien zur Abdeckung geeignet, beispielsweise Geovlies. Durch diese zusätzliche Abdeckung 10 kann beispielsweise eine weiter verbesserte Verankerung der Vorrichtung V im Erdreich erreicht werden, wodurch auftretende Kräfte bei horizontalen Belastungen der Vorrichtung V von den jeweiligen äußeren Stützplatten 2.2 über die zusätzliche Abdeckung 10 auf einen größeren Bereich des Erdreichs über der Vorrichtung V abgeleitet werden können. Dadurch ist die Vorrichtung V zusätzlich stabilisiert.

Alternativ oder zusätzlich zur Abdeckung 10 können auch die Stützplatten 2 in Beton eingegossen werden, so dass in der Bodengrube 5 eine geschlossene Betonplatte ausgebildet wird, welche mit Erdreich bedeckt wird. Dies hat eine ähnliche Wirkung wie die Abdeckung 10, da das Erdreich auf der Betonplatte als starke und kompakte Auflast wirkt und ein Kippen der Vorrichtung V auch bei sehr großen horizontalen Lasten verhindert.

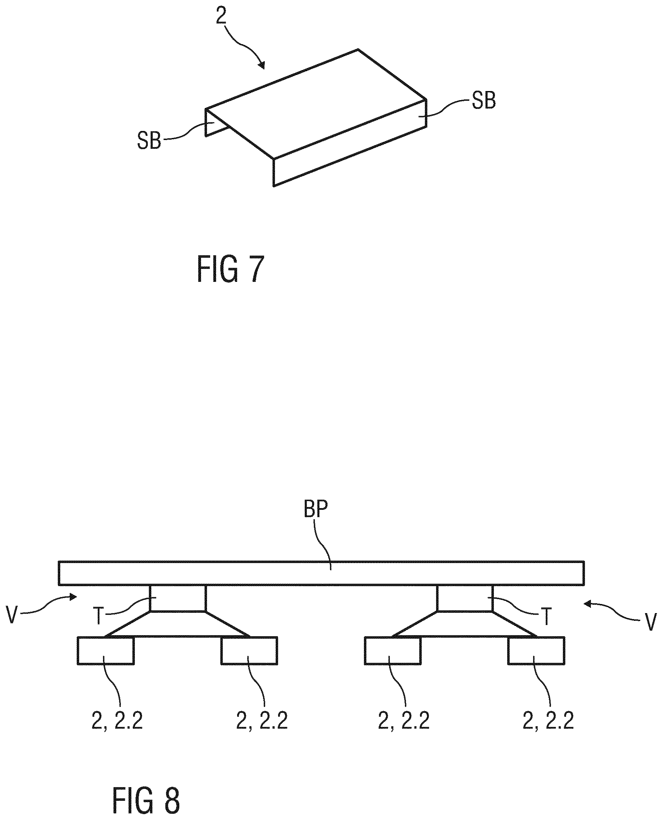

**Figur 7** zeigt eine weitere vorteilhafte Ausführungsform einer Stützplatte 2 der Vorrichtung V. Bei dieser Stützplatte 2 kann es sich um eine innere Stützplatte 2.1 oder um eine äußere Stützplatte 2.2 der Vorrichtung V handeln. Die Stützplatte 2 weist abgewinkelte Seitenbereiche SB auf. In dem hier dargestellten Ausführungsbeispiel sind Längsseitenbereiche der Stützplatte 2 nach unten abgewinkelt. In anderen Ausführungsbeispielen können alternativ oder zusätzlich auch Querseitenbereiche abgewinkelt sein. Es können ein oder mehrere Seitenbereiche SB abgewinkelt sein, jeweils nach unten oder nach oben, vorteilhafterweise in einem Winkel von ca. 90°. Auf diese Weise ist eine horizontale Verankerung der Vorrichtung V im Boden erreicht, so dass eine Bewegung der Vorrichtung V in horizontaler Richtung durch die abgewinkelten Seitenbereiche SB der Stützplatten 2 verhindert ist. An der Vorrichtung V können dabei alle oder mehrere Stützplatten 2 die gleichen abgewinkelten Seitenbereiche SB aufweisen oder jeweils unterschiedliche abgewinkelte Seitenbereiche SB. Die Vorrichtung V kann auch ein oder mehrere Stützplatten 2 mit jeweils zumindest einem abgewinkelten Seitenbereich SB und ein oder mehrere weitere Stützplatten 2 ohne abgewinkelte Seitenbereiche SB aufweisen.

**Figur 8** zeigt eine Verwendung einer erfindungsgemäßen Ausführungsform der Vorrichtung V. Der Unterschied zu den bisher beschriebenen Ausführungsformen besteht darin, dass diese Ausführungsform keine Trägersäule 1, sondern ein Trägerelement T aufweist. Diese Ausführungsform der Vorrichtung V zur Verankerung von Aufbauten im Erdboden umfasst somit das Trägerelement T und die in der Stützebene angeordneten Stützplatten 2, wobei die hier dargestellten Vorrichtungen V lediglich äußere Stützplatten 2.2 aufweisen. Das Trägerelement T, die Stützplatten 2 und die Verbindungsstege 3 bestehen auch hier aus Stahl und sind durch Schraubverbindungen miteinander verbunden. Die Stützplatten 2 sind durch Verbindungsstege 3 mit dem Trägerelement T verbunden, indem horizontal ausgerichtete Verbindungsstege 3, nämlich radiale Stege 3.1 und tangentiale Stege 3.2, in der Stützebene äußere Stützplatten 2.2 untereinander verbinden und Schrägstege 3.3 das Trägerelement T mittels eines am Trägerelement T angeordneten Befestigungselementes 4 mit den in der Stützebene liegenden äußeren Stützplatten 2.2 verbinden. Das Befestigungselement 4 kann auch entfallen, so dass die Schrägstege 3.3 direkt am Trägerelement T angeordnet sind. Alternativ zur hier dargestellten Ausführungsform kann sich auch dieses Trägerelement T, analog zur Trägersäule 1, bis zur Stützebene hinunter erstrecken. In diesem Fall kann auch diese Ausführungsform der Vorrichtung V eine zentrale Stützplatte 2.1 aufweisen. Diese ist dann zweckmäßigerweise an einer Unterseite des Trägerelements T angeordnet. Die in den vorhergehenden Figuren beschriebenen weiteren Merkmale kann auch diese Ausführungsform der Vorrichtung V aufweisen.

Diese Ausführungsform der Vorrichtung V ist beispielsweise, wie hier dargestellt, als Fundament für ein Bauwerk verwendbar. Beispielsweise sind, wie hier dargestellt, eine Mehrzahl derartiger Vorrichtungen V auf dem Grund einer Bodenaushebung aufsetzbar, welche anschließend mit Füllmaterial zu verfüllen ist. Die Trägerelemente T der Vorrichtungen V befinden sich nach dem Verfüllen der Bodenaushebung auf Höhe einer Geländeoberkante, d. h. auf Höhe der Bodenebene. Auf diese Trägerelemente T ist dann das im Erdboden zu verankernde Bauwerk, beispielsweise eine Bodenplatte BP eines Gebäudes, aufzusetzen, wie hier dargestellt. Dies ermöglicht ein sehr schnelles, einfaches und kostengünstiges Ausbilden des Fundamentes im Vergleich zu herkömmlichen Fundamenten, welche sehr aufwändig zu gießen sind und danach eine vorgegebene Zeit, beispielsweise mehrere Tage, aushärten müssen, bevor die Bauarbeiten fortgesetzt werden können.

Auch diese Ausführungsform der Vorrichtung V kann in Einzelteilen an den Aufstellungsort transportiert und dort zusammengeschraubt werden. Zur Aufstellung ist es auch hier lediglich erforderlich, eine Grube auszuheben, in die die montierte Vorrichtung V gesetzt wird bzw. bei dieser Ausführungsform eine Mehrzahl von Vorrichtungen V gesetzt werden. Danach wird die Grube mit dem Bodenaushub wieder verfüllt und verdichtet.

### BEZUGSZEICHENLISTE

- 1: Trägersäule
- 1.1: Rohrverlängerung
- 1.2: Kopplungselement
- 2: Stützplatte
- 2.1: zentrale Stützplatte
- 2.2: äußere Stützplatte
- 2.2.1: Versteifungsblech
- 3: Verbindungssteg
- 3.1: radialer Steg
- 3.2: tangentialer Steg
- 3.3: Schrägsteg
- 4: Befestigungselement
- 5: Bodengrube
- 6: Erdoberfläche
- 7: Transporthilfsbauteil
- 8: Verankerungsmittel
- 9: Ansatzteile
- 10: zusätzliche Abdeckung

- BP: Bodenplatte
- SB: Seitenbereich
- T: Trägerelement
- V: Vorrichtung
- X: Einzelheit zur äußeren Stützplatte

## Patentansprüche

1. Vorrichtung (V) zur Verankerung von Aufbauten im Erdboden, mit einem Trägerelement (T) und mit in einer Stützebene angeordneten Stützplatten (2), wobei
- die Stützplatten (2) durch Verbindungsstege (3) mit dem Trägerelement (T) verbunden sind, indem
- horizontale Stege (3.1, 3.2) in der Stützebene äußere Stützplatten (2.2) untereinander verbinden und
- Schrägstege (3.3) das Trägerelement (T) mittels eines am Trägerelement (T) angeordneten Befestigungselementes (4) mit den in der Stützebene liegenden Stützplatten (2.1, 2.2) verbinden,
- das Trägerelement (T), die Stützplatten (2) und die Verbindungsstege (3) aus Stahl bestehen, **dadurch gekennzeichnet, dass**
- das Trägerelement (T), die Stützplatten (2) und die Verbindungsstege (3) durch Schraubverbindungen miteinander verbunden sind, und dass
- an den äußeren Stützplatten (2.2) Versteifungsbleche (2.2.1) angeschweißt sind, an denen die horizontalen Stege (3.1, 3.2) und die Schrägstege (3.3) mittels Schraubverbindungen befestigt sind.

2. Vorrichtung (V) nach Anspruch 1, wobei das Trägerelement (T) eine rohrförmige Trägersäule (1) ist, welche als ein durchgehendes Teil, welches geeignet ist, sich von der Stützebene bis oberhalb des Erdbodens (6) zu erstrecken, ausgebildet ist, und wobei horizontale Stege (3.1) in der Stützebene die äußeren Stützplatten (2.2) mit der Trägersäule (1) verbinden.

3. Vorrichtung (V) nach Anspruch 2,
**dadurch gekennzeichnet, dass** am bodenseitigen Ende der rohrförmigen Trägersäule (1) eine zentrale Stützplatte (2.1) angeschweißt ist.

4. Vorrichtung (V) nach einem der Ansprüche 1 bis 3,
**dadurch gekennzeichnet, dass** die Stützplatten (2) rechteckförmig ausgebildet sind.

5. Vorrichtung (V) nach einem der vorhergehenden Ansprüche, **dadurch gekennzeichnet, dass** die Verbindungsstege (3) ein U-Profil aufweisen.

6. Vorrichtung (V) nach einem der vorhergehenden Ansprüche, **dadurch gekennzeichnet, dass** die Vorrichtung (V) vier äußere Stützplatten (2.2) enthält.

7. Vorrichtung (V) nach Anspruch 2, **dadurch gekennzeichnet, dass** die Verbindungsstege (3) mit der rohrförmigen Trägersäule (1) über Drehgelenke verbunden sind.

8. Vorrichtung (V) nach Anspruch 2, **dadurch gekennzeichnet, dass** an der rohrförmigen Trägersäule (1) Kopplungselemente (1.2) zur lösbaren Verbindung mit Transporthilfsbauteilen (7) angeordnet sind.

9. Vorrichtung (V) nach einem der vorhergehenden Ansprüche, **dadurch gekennzeichnet, dass** die in der Stützebene angeordneten Bauteile mit einer zusätzlichen Abdeckung (10) versehen sind.

10. Vorrichtung (V) nach einem der vorhergehenden Ansprüche, **dadurch gekennzeichnet, dass** an den äußeren Stützplatten (2.2) zusätzliche Verankerungen angebracht sind.

11. Vorrichtung (V) nach einem der vorhergehenden Ansprüche, **dadurch gekennzeichnet, dass** an den Stützplatten (2.1, 2.2) einstellbare Stützfüße zum Ausgleich von Unebenheiten der Bodenfläche angeordnet sind.

12. Vorrichtung (V) nach einem der vorhergehenden Ansprüche,
**dadurch gekennzeichnet, dass** zumindest ein Seitenbereich (SB) zumindest einer der Stützplatten (2.1, 2.2) abgewinkelt ist.

13. Vorrichtung (V) nach einem der vorhergehenden Ansprüche,
**dadurch gekennzeichnet, dass** zumindest eine der Stützplatten (2.1, 2.2) schwenkbar angeordnet ist.

14. Vorrichtung (V) nach Anspruch 2,
**dadurch gekennzeichnet, dass** die rohrförmige Trägersäule (1) außermittig angeordnet ist.

## Claims

1. Device (V) for anchoring constructions in the ground, having a support element (T) and having supporting plates (2) which are disposed in a supporting plane, wherein
- the supporting plates (2) are connected to the support element (T) by connecting webs (3), in that
- horizontal webs (3.1, 3.2) in the supporting plane interconnect outer supporting plates (2.2), and
- oblique webs (3.3) connect the support element (T) to the supporting plates (2.1, 2.2) lying in the supporting plane by means of a fastening element (4) which is disposed on the support element (T),
- the support element (T), the supporting plates (2), and the connecting webs (3) are composed of steel, **characterized in that**
- the support element (T), the supporting plates (2), and the connecting webs (3) are interconnected by screw connections, and **in that** bracing plates (2.2.1) are welded to the outer supporting plates (2.2), to which bracing plates the horizontal webs (3.1, 3.2) and the oblique webs (3.3) are fastened by means of screw connections.

2. Device (V) according to Claim 1, wherein the support element (T) is a tubular support column (1) which is configured as a continuous part suitable for extending from the supporting plane to above the ground (6), and wherein horizontal webs (3.1) in the supporting plane connect the outer supporting plates (2.2) to the support column (1).

3. Device (V) according to Claim 2, **characterized in that** a central supporting plate (2.1) is welded to the ground-side end of the tubular support column (1).

4. Device (V) according to one of Claims 1 to 3, **characterized in that** the supporting plates (2) are configured so as to be rectangular.

5. Device (V) according to one of the preceding claims, **characterized in that** the connecting webs (3) display a U-profile.

6. Device (V) according to one of the preceding claims, **characterized in that** the device (V) contains four outer supporting plates (2.2).

7. Device (V) according to Claim 2, **characterized in that** the connecting webs (3) are connected to the tubular support column (1) via swivel joints.

8. Device (V) according to Claim 2, **characterized in that** coupling elements (1.2) for the releasable connection to temporary shipping components (7) are disposed on the tubular support column (1).

9. Device (V) according to one of the preceding claims, **characterized in that** the components disposed in the supporting plane are provided with an additional covering (10).

10. Device (V) according to one of the preceding claims, **characterized in that** additional anchoring is attached to the outer supporting plates (2.2).

11. Device (V) according to one of the preceding claims, **characterized in that** adjustable supporting feet for compensating unevenness of the ground surface are disposed on the supporting plates (2.1, 2.2).

12. Device (V) according to one of the preceding claims,
**characterized in that** at least one lateral region (SB) of at least one of the supporting plates (2.1, 2.2) is angled.

13. Device (V) according to one of the preceding claims,
**characterized in that** at least one of the supporting plates (2.1, 2.2) is pivotably disposed.

14. Device (V) according to Claim 2, **characterized in that** the tubular support column (1) is eccentrically disposed.

## Revendications

1. Dispositif (V) pour l'ancrage de superstructures dans le sol, comprenant un élément porteur (T) et des plaques de support (2) disposées dans un plan de support,
- les plaques de support (2) étant connectées à l'élément porteur (T) par des nervures de connexion (3), par le fait que
- des nervures horizontales (3.1, 3.2) relient les unes aux autres dans le plan de support des plaques de support extérieures (2.2) et
- des nervures obliques (3.3) relient l'élément porteur (T), au moyen d'un élément de fixation (4) disposé sur l'élément porteur (T), aux plaques de support (2.1, 2.2) situées dans le plan de support,
- l'élément porteur (T), les plaques de support (2) et les nervures de connexion (3) se composent d'acier,
**caractérisé en ce que**
- l'élément porteur (T), les plaques de support (2) et les nervures de connexion (3) sont connectés les uns aux autres par des connexions par vissage et **en ce que**
- des tôles de renforcement (2.2.1) sont soudées aux plaques de support extérieures (2.2), au niveau desquelles tôles de renforcement les nervures horizontales (3.1, 3.2) et les nervures obliques (3.3) sont fixées au moyen de connexions par vissage.

2. Dispositif (V) selon la revendication 1, dans lequel l'élément porteur (T) est une colonne porteuse tubulaire (1) qui est réalisée sous forme de pièce continue qui est appropriée pour s'étendre depuis le plan de support jusqu'au-dessus du sol (6), et des nervures horizontales (3.1) dans le plan de support reliant les plaques de support extérieures (2.2) à la colonne porteuse (1).

3. Dispositif (V) selon la revendication 2,
**caractérisé en ce qu'**une plaque de support centrale (2.1) est soudée à l'extrémité du côté du sol de la colonne porteuse tubulaire (1).

4. Dispositif (V) selon l'une quelconque des revendications 1 à 3,
**caractérisé en ce que** les plaques de support (2) sont réalisées sous forme rectangulaire.

5. Dispositif (V) selon l'une quelconque des revendications précédentes,
**caractérisé en ce que** les nervures de connexion (3) présentent un profilé en U.

6. Dispositif (V) selon l'une quelconque des revendications précédentes,
**caractérisé en ce que** le dispositif (V) contient quatre plaques de support extérieures (2.2).

7. Dispositif (V) selon la revendication 2, **caractérisé en ce que** les nervures de connexion (3) sont connectées par le biais d'articulations pivotantes à la colonne porteuse tubulaire (1).

8. Dispositif (V) selon la revendication 2, **caractérisé en ce que** des éléments d'accouplement (1.2) sont disposés au niveau de la colonne porteuse tubulaire (1) pour la connexion amovible à des composants auxiliaires de transport (7).

9. Dispositif (V) selon l'une quelconque des revendications précédentes,
**caractérisé en ce que** les composants disposés dans le plan de support sont pourvus d'un recouvrement supplémentaire (10).

10. Dispositif (V) selon l'une quelconque des revendications précédentes,
**caractérisé en ce que** des ancrages supplémentaires sont montés au niveau des plaques de support extérieures (2.2).

11. Dispositif (V) selon l'une quelconque des revendications précédentes,
**caractérisé en ce que** des pieds de support ajustables sont disposés sur les plaques de support (2.1, 2.2) pour compenser les inégalités de la surface du sol.

12. Dispositif (V) selon l'une quelconque des revendications précédentes,
**caractérisé en ce qu'**au moins une région latérale (SB) d'au moins l'une des plaques de support (2.1, 2.2) est coudée.

13. Dispositif (V) selon l'une quelconque des revendications précédentes,
**caractérisé en ce qu'**au moins l'une des plaques de support (2.1, 2.2) est disposée de manière pivotante.

14. Dispositif (V) selon la revendication 2, **caractérisé en ce que** la colonne porteuse tubulaire (1) est disposée de manière excentrée.
